# EUROPÄISCHE PATENTSCHRIFT

(11) **EP 1 052 834 B1**
(45) Veröffentlichungstag und Bekanntmachung des Hinweises auf die Patenterteilung: **26.05.2004**
(21) Anmeldenummer: 00105799.1
(22) Anmeldetag: 18.03.2000
(51) Int. Cl.: H04M 1/725, B60R 11/02, H04M 1/60

(54) **Kommunikationssystem eines Kraftfahrzeuges**
Communication system for a vehicle
Système de communication pour un véhicule

(30) Priorität: 11.05.1999 DE 19921533
(43) Veröffentlichungstag der Anmeldung: 15.11.2000
(73) Patentinhaber: Siemens Aktiengesellschaft, 80333 München (DE)
(72) Erfinder: Tilgner, Rainer, 64380 Rossdorf (DE); Dietrich, Frank, 35440 Linden (DE)

(56) Entgegenhaltungen:
- WO-A-98/15075
- WO-A-98/17502
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, Nr. 3, 1998, Seiten 110-117, XP000783249 ISSN: 0014-0171

## Beschreibung

Die Erfindung betrifft ein Kommunikationssystem eines Kraftfahrzeuges mit einem Mobiltelefon mit einer ersten Sende-/Empfangseinrichtung zur Kommunikation auf einer ersten Funkverbindung zwischen dem Mobiltelefon und einer stationären Sende-/Empfangsanlage eines Mobilfunksystems, einem im Kraftfahrzeug eingebauten Audio- und/oder Informationssystem mit einer Empfangseinrichtung und einer akustischen Ausgabeeinheit sowie einem Mikrofon zur Realisierung einer Freisprechfunktion, wobei eine Gesprächs- und/oder Datenübertragung zwischen dem Mobiltelefon und dem Audio- und/oder Informationssystem über eine drahtlose Verbindung erfolgt und am Mobiltelefon eingehende Gespräche über die akustische Ausgabeeinheit ausgebbar sind und das Mobiltelefon und das Audio- und/oder Informationssystem jeweils als eigenständige Geräte ausgebildet sind. Weiterhin betrifft die Erfindung ein Rundfunkgerät eines Kraftfahrzeuges, das in einem solchen Kommunikationssystem einsetzbar ist, sowie ein Verfahren zum Betreiben einer Freisprecheinrichtung eines Kraftfahrzeuges.

Zum sicheren Betrieb von Mobiltelefonen in Kraftfahrzeugen während der Fahrt werden Freisprecheinrichtungen eingesetzt, die es dem Fahrer erlauben, ein Telefongespräch zu führen ohne das Mobiltelefon in einer Hand halten zu müssen. Eine solche Freisprecheinrichtung enthält zumindest ein Mikrofon zur Aufnahme der Sprache des Fahrers oder eines anderen Mitfahrers und einen Lautsprecher zur Ausgabe der Sprache des Anrufenden. Entsprechende Freisprecheinrichtungen können als eigenständige Einheiten im Fahrzeug montiert werden und werden über eine Schnittstelle mit dem Mobiltelefon verbunden.

Da die meisten Kraftfahrzeuge über ein Audiosystem, in der Regel ein Rundfunkgerät, verfügen, sind Lösungen bekannt, die die Lautsprecher des Rundfunkgerätes auch für die Freisprecheinrichtung mitbenutzen. In diesem Falle muß eine Verbindung zwischen dem Rundfunkgerät und dem Mobiltelefon hergestellt und somit eine Halterung für das Mobiltelefon im Fahrzeug angebracht werden. Die Realisierung einer solchen Freisprecheinrichtung ist insbesondere bei nachträglicher Anbringung im Kraftfahrzeug arbeitsaufwendig und erfordert die Verlegung von Kabeln.

Aus der WO 96/32783 ist eine Freisprecheinrichtung bekannt, mit der der Installationsaufwand verringert werden kann. Hierzu ist ein Interface vorgesehen, das mit dem Mobiltelefon verbunden wird. Das Interface enthält eine Sendeeinheit zur drahtlosen Übermittlung der eingehenden Sprachsignale eines Telefongesprächs an ein Rundfunkgerät im Fahrzeug. Die von dem Interface übertragenen Signale werden von der Antenne des Rundfunkgerätes aufgefangen und im Rundfunkempfänger in akustische Signale umgewandelt, die über einen Verstärker den Lautsprechern zugeführt werden. Die Übertragung zwischen dem Interface und dem Rundfunkgerät erfolgt bei einer beliebigen Rundfunkfrequenz im AM- oder FM-Bereich. Bei einem eingehenden Gespräch kann der Fahrer nach Wahl des richtigen Empfangskanals somit die eingehenden Sprachsignale über den Lautsprecher des Rundfunkgerätes hören. Das Mikrofon befindet sich in der Halterung des Interface. Somit wird eine Freisprecheinrichtung unter Einbeziehung eines herkömmlichen Rundfunkgerätes realisiert, die den Verkabelungsaufwand reduziert.

Dennoch ist auch bei dieser Freisprecheinrichtung zunächst eine Grundinstallation der Halterung mit dem Interface im Kraftfahrzeug durchzuführen. Ferner ist jeweils das Mobiltelefon mit dem Interface zu verbinden, so dass auch bei jeder Benutzung des Mobiltelefons im Kraftfahrzeug gewisse Handhabungsschritte erforderlich sind.

Aus der WO-A-98/17502 ist ein Autoradio mit einem abnehmbaren Bedienteil bekannt, das ein Funktelefon zur Kommunikation mit einer Funkstation aufweist. Als drahtlose Schnittstelle zwischen dem fest im Fahrzeug eingebauten Teil des Autoradios und dem Bedienteil ist eine optische Schnittstelle vorgesehen. Nachteilig ist bei diesem Autoradio, dass das Autoradio und das Funktelefon eine Geräteinheit bilden. Das Autoradio ist insbesondere nicht als Freisprecheinheit für ein handelsübliches Mobiltelefon vorgesehen.

Aus der WO-A-98/15075 ist ein Telematikgerät bekannt, in dem ein Autoradio mit einem RDS-Modul, ein Funktelefon, ein Ortungs- und Navigationssystem in einem Gehäuse angeordnet sind.

Aus der Veröffentlichung Haartsen, J.:"Bluetooth-The universal radio interface for ad hoc, wireless connectivity", Ericsson Review, Nr. 3, Ericsson, Stockholm, SE (1998), Seiten 110 bis 117 ist eine Kurzstrecken-Funkschnittstelle bekannt. Als Anwendungsgebiete sind Geräteverbindungen zwischen Telefonen, Modems, Haedsets, PDAs, Computern, Druckern, Projektoren und Local Area Networks angegeben.

Aufgabe der Erfindung ist es daher, ein Kommunikationssystem, das ein Audio- und/oder Informationssystem, insbesondere ein Rundfunkgerät, sowie ein Mobiltelefon beinhaltet, derart mit einer Freisprechfunktion zu versehen, dass kein zusätzlicher Installationsaufwand im Kraftfahrzeug erforderlich ist und auch bei jeder neuen Nutzung des Mobiltelefons im Kraftfahrzeug zu Beginn der Fahrt keine zusätzlichen Handhabungsschritte, wie beispielsweise das Verbinden mit einem Interface, erforderlich sind. Eine weitere Aufgabe der Erfindung besteht darin, ein Rundfunkgerät anzugeben, das an die Erfordernisse eines solchen erfindungsgemäßen Kommunikationssystems angepasst ist. Eine weitere Aufgabe besteht darin, ein Verfahren zum komfortablen Betreiben einer Freisprecheinrichtung eines Kraftfahrzeuges anzugeben.

Die erstgenannte Aufgabe wird bei einem gattungsgemäßen Kommunikationssystem eines Kraftfahrzeuges dadurch gelöst, dass in das Mobiltelefon eine zweite Sende-/Empfangseinrichtung integriert ist und das Audio- und/oder Informationssystem neben der Empfangseinrichtung auch eine Sendeeinrichtung zur Herstellung einer zweiten Funkverbindung als bidirektionale Kurzstrecken-Funkverbindung zwischen der zweiten Sende-/Empfangseinrichtung des Mobiltelefons und dem Audio- oder Informationssystem enthält.

Bei dem erfindungsgemäßen Kommunikationssystem erfolgt somit sowohl die Übertragung eingehender als auch ausgehender Sprach- und/oder Datensignale zwischen dem Mobiltelefon und dem Audio- oder Informationssystem über eine Funkverbindung. Hierdurch wird erreicht, dass keinerlei zusätzlicher mechanischer Installationsaufwand für die Freisprecheinrichtung erforderlich ist. Vielmehr ist die Freisprecheinrichtung vollständig in das Audio- oder Informationssystem integriert. Auch das Verbinden des Mobiltelefons mit einem Interface oder dergleichen vor jeder Fahrt entfällt vollständig. Bei dem erfindungsgemäßen Kommunikationssystem kann daher das Mobiltelefon beispielsweise in der Tasche des Fahrers verbleiben.

Bei der Funkverbindung zwischen dem Mobiltelefon und dem Audio- und/oder Informationssystem handelt es sich um eine Kurzstrecken-Funkverbindung, so daß die Übertragung vorzugsweise auch auf anderen Frequenzen oder mit anderen Übertragungsverfahren erfolgt als die Übertragung auf der ersten Funkverbindung zwischen dem Mobiltelefon und einer stationären Sende-/Empfangsanlage des Mobilfunksystems.

Bei dem Informationssystem kann es sich insbesondere um ein im Fahrzeug vorhandenes Navigations- oder Telematiksystem mit Sprachein- und ausgabe handeln. Wegen der in Kraftfahrzeugen heute aber noch größeren Verwendung von Rundfunkempfängern wird insbesondere die Verwendung eines Rundfunkgerätes als Audiosystem in dem beschriebenen Kommunikationssystem bevorzugt. Das Rundfunkgerät enthält dann neben seiner herkömmlichen Empfangseinheit zum Empfang von Rundfunksignalen eine Sende-/Empfangseinheit zur Übertragung von Signalen zwischen dem Rundfunkgerät und dem Mobiltelefon. Die Übertragung zwischen dem Mobiltelefon und dem Rundfunkgerät erfolgt dabei auf Frequenzen außerhalb der Frequenzbänder der Rundfunksignale.

In dem Rundfunkgerät sind alle für die Freisprecheinrichtung wesentlichen Elektronikkomponenten enthalten. Hierbei handelt es sich insbesondere um Komponenten zur automatischen Umschaltung in die Freisprechfunktion oder auch um eine Elektronik zur Verhinderung einer Rückkopplung zwischen der Sprachausgabe über die Lautsprecher und der Spracheingabe über das Mikrofon. Das Mikrofon kann insbesondere auch im Rundfunkgerät selbst angebracht sein. Um bei der Positionierung des Rundfunkgerätes im Fahrzeug jedoch nicht auf die Plazierung des Mikrofons in der Nähe eines Sprechers im Kraftfahrzeug Rücksicht nehmen zu müssen, ist insbesondere auch vorgesehen, daß das Rundfunkgerät einen Mikrofoneingang aufweist und das Mikrofon an anderer Stelle im Kraftfahrzeug angeordnet ist. Geeignete Einbauorte für das Mikrofon im Kraftfahrzeug sind insbesondere der Wagenhimmel, die A-Säule, das Armaturenbrett oder die Mittelkonsole, die Sonnenblende oder der Innenspiegel. Zur Erzielung eines guten Signalrauschverhältnisses kann das Mikrofon insbesondere auch als Richtmikrofon ausgebildet sein. Das externe Mikrofon kann mit dem Rundfunkgerät über eine Kabelverbindung verbunden sein, jedoch ist auch hier insbesondere eine drahtlose Verbindung vorteilhaft. Bei letzterer kann es sich insbesondere um eine Infrarot- oder eine Funkverbindung handeln.

Die Funkübertragung zwischen dem Rundfunkgerät und dem Mobiltelefon erfolgt insbesondere bei Frequenzen von mehr als 2 GHz. Sie liegt dann sowohl oberhalb der üblichen Frequenzen für Funkverbindungen zwischen dem Mobiltelefon und einer stationären Sende-/Empfangsantage eines Mobilfunksystems als auch oberhalb der Frequenzbänder für Rundfunksignale. Die Sendeleistung der Sendeeinrichtung für die fahrzeuginterne Verbindung zwischen Mobiltelefon und Rundfunkgerät kann klein gehalten werden. Eine Reichweite der Kurzstrecken-Funkverbindung von etwa 10 m wird als ausreichend angesehen. In diesem Zusammenhang ist eine Funkverbindung nach dem Bluetooth-Verfahren von besonderer Bedeutung. Das Bluetooth-Verfahren wurde in Zusammenarbeit zwischen verschiedenen Firmen als Kurzstreckenkommunikationsverfahren mit Reichweiten von typischerweise 10 m entwickelt. Optional sind Reichweiten bis etwa 100 m möglich. Die Übertragungsleistung ist mit 1 mW sehr gering. Zur Übertragung ist das Frequenzband von 2,4 GHz vorgesehen. Mit dem Verfahren können Datenraten bis zu ein Megabit/sec realisiert werden. Von besonderem Interesse ist der geringe Strombedarf im Standby-Betrieb von nur 0,3 mA. Hierdurch kann ein Bluetooth-Empfänger im Rundfunkgerät ständig im Standby-Betrieb gehalten werden. Auch wenn das Fahrzeug für längere Zeit nicht genutzt wird, ist keine zusätzliche besondere Beanspruchung der Batterie gegeben. Als Folge des permanent möglichen Standby-Betriebs auch im Kraftfahrzeug, sind vom Fahrer bei Betreten des Kraftfahrzeuges mit seinem Mobiltelefon keine besonderen Schritte zur Aktivierung der Freisprecheinrichtung erforderlich. Vielmehr wird mit dem später noch beschriebenen Verfahren eine automatische Aktivierung der Freisprecheinrichtung erreicht. Am Rundfunkgerät ist ein Bedienelement vorgesehen, mit dem der Fahrer ein am Mobiltelefon eingehendes Gespräch annehmen kann. Dies entspricht der bekannten Vorgehensweise bei einem eingehenden Telefongespräch am Mobiltelefon selbst. Weitere Schritte sind bei dem erfindungsgemäßen Kommunikationssystem vom Fahrer nicht durchzuführen.

In einer besonderen Ausführungsform ist vorgesehen, daß das Mobiltelefon über Bedienelemente des Rundfunkgerätes bedienbar ist. Dies bedeutet mit anderen Worten, daß der Fahrer bei einem Gesprächswunsch durch Bedienung der Bedienelemente am Rundfunkgerät die Nummer seines Gesprächspartners wählen kann. Auch in diesem Fall ist es nicht erforderlich, daß der. Fahrer das Mobiltelefon in die Hand nimmt bzw. das Mobiltelefon sich in seiner unmittelbaren Reichweite befindet.

Durch die bidirektionale Daten- und Sprachübertragung zwischen dem Mobiltelefon und dem Rundfunkgerät ist es jedoch weiterhin in einer besonderen Ausführungsform auch möglich, daß das Mobiltelefon beispielsweise von Mitfahrem im Fahrzeug als Fernbedienung für das Rundfunkgerät oder andere mit dem Rundfunkgerät verbundene Geräte im Fahrzeug benutzt wird.

In einer Weitergestaltung des Kommunikationssystems ist vorgesehen, daß das Rundfunkgerät zur Verarbeitung von Sprachbefehlen mit einem Spracherkennungssystem verbunden oder ausgerüstet ist. Hierdurch kann der Fahrer bei einem Gesprächswunsch durch Sprachbefehle dem Kommunikationssystem mitteilen, welchen Gesprächspartner er wünscht. Beispielsweise spricht der Fahrer hierzu lediglich den Namen des gewünschten Gesprächspartners. Im Kommunikationssystem und insbesondere im Rundfunkgerät des Kommunikationssystemes oder auch im Mobiltelefon ist dann die zu dem genannten Namen gehörige Telefonnummer abgelegt. Bei Erkennung des gesprochenen Wortes durch das Spracherkennungssystem wird anschließend die zugehörige Telefonnummer automatisch gewählt und die Gesprächsverbindung hergestellt. Das Spracherkennungssystem kann auch im Mobiltelefon selbst integriert sein.

Wenn bisher und auch im weiteren im wesentlichen von einem Rundfunkgerät die Rede war, so kann das Kommunikationssystem als Audio- und/oder Informationssystem jedoch auch andere Geräte beinhalten. Neben dem bereits genannten Navigations- oder Telematiksystem kann es sich dabei beispielsweise auch um einen CD-Spieler und dergleichen handeln. Insbesondere kann und wird das Rundfunkgerät in der Regel auch mit anderen Audiosystemen zusammenarbeiten bzw. diese werden in das Rundfunkgerät integriert sein.

Zur Information des Fahrers über eine geeignete Wegstrecke zu seinem Zielort werden Navigationssysteme eingesetzt. Navigationssysteme sind als sogenannte Onboard- oder auch als Offboard-Navigationssysteme bekannt. Bei den Onboard-Navigationssystemen erfolgt die Routenberechnung und -anzeige vollständig mit im Fahrzeug vorhandenen Komponenten. Bei den Offboard-Navigationssystemen erfolgt eine Datenübertragung beispielsweise des Wegenetzes von einer externen Station in das Kraftfahrzeug. Dies wird insbesondere über das Mobiltelefon erfolgen. In allen Fällen ist es aber wünschenswert, daß Navigationssysteme auch aktuelle Verkehrsmeldungen in die Routenberechnung einbeziehen. Man spricht dann von einem dynamischen Navigationssystem. Die Übertragung der Verkehrsmeldungen kann dabei über Rundfunkkanäle (z.B. RDS-TMC) oder über ein Mobilfunknetz erfolgen. Das erfindungsgemäße Kommunikationssystem ist daher in einer besonderen Ausführungsform mit einem Navigationssystem verbunden oder enthält ein solches. Zur Realisierung eines dynamischen Navigationssystems ist das Rundfunkgerät zur Weiterleitung von Verkehrs-, Fahr- oder Routeninformationen an das Navigationssystem ausgelegt, die entweder von einer Rundfunkstation oder über das Mobiltelefon eingehen.

Zur Filterung der eingehenden Verkehrsinformationen ist es weiterhin von Vorteil, wenn das Mobiltelefon Mittel zur Positionsbestimmung enthält, beispielsweise einen GPS-Empfänger oder ein System zur Auswertung der Position über das Mobilfunknetz (cellular positioning). Hierdurch wird gleichzeitig auch das Aussenden eines Notrufes erleichtert, da mit dem Notruf die exakte Position des Fahrzeuges durchgegeben werden kann.

Wie bereits erwähnt wurde, kann das Mobiltelefon aufgrund der Datenübertragung zum Rundfunkgerät auch als Fernbedienung benutzt werden. Es können jedoch nicht nur Funktionen des Rundfunkgeräts ferngesteuert eingestellt werden, vielmehr können auch andere Fahrzeugfunktionen gesteuert werden, wenn das entsprechende Gerät mit dem Rundfunkgerät über einen geeigneten Bus verbunden ist.

Ein erfindungsgemäßes Rundfunkgerät eines Kraftfahrzeuges zur Verwendung in dem zuvor beschriebenen Kommunikationssystem weist eine Eingabeeinheit, eine Empfangseinrichtung zum Empfang von Rundfunksignalen innerhalb bestimmter Frequenzbänder und Mittel zum Umsetzen der empfangenen Rundfunksignale in akustische Signale über eine akustische Ausgabeeinheit auf. Erfindungsgemäß ist vorgesehen, daß in das Rundfunkgerät zusätzlich eine weitere Empfangseinheit und eine mit der weiteren Empfangseinheit in Verbindung stehende Sendeeinheit integriert ist, wobei die weitere Empfangseinheit und die Sendeeinheit zur drahtlosen Anbindung eines externen Gerätes über eine bidirektionale Kurzstrecken-Funkverbindung ausgelegt ist und die Ausgabe von über die weitere Empfangseinheit empfangenen Sprachsignalen über die akustische Ausgabeeinheit erfolgt und die Übertragung mittels der Kurzstrecken-Funkverbindung außerhalb der Frequenzbänder der Rundfunksignale erfolgt. Durch die in das Rundfunkgerät integrierte Sende-/Empfangseinrichtung für eine bidirektionale Kurzstrecken-Funkverbindung kann das Rundfunkgerät mit einer Vielzahl von Geräten, die über eine entsprechende Einrichtung verfügen, in Verbindung treten. Neben dem oben bereits genannten Mobiltelefon kann es sich bei dem externen Gerät insbesondere um einen Personalcomputer handeln. Ist das Rundfunkgerät beispielsweise mit einem Navigationssystem verbunden bzw. enthält dieses, so kann der Fahrer bereits zu Hause am Personalcomputer seine Fahrroute ausarbeiten. Die Übertragung der Informationen von dem Personalcomputer in das Navigationssystem muß dann nicht mehr von Hand erfolgen oder über ein extra zu installierendes Kabel. Vielmehr kann die Übertragung drahtlos über die Kurzstrecken-Funkverbindung zum Rundfunkgerät und von dort zum Navigationssystem erfolgen.

Bei dem externen Gerät kann es sich weiterhin insbesondere um einen Kopfhörer handeln. Der Kopfhörer ist über die Kurzstrecken-Funkverbindung mit dem Rundfunkgerät direkt verbunden. Somit können einzelne Mitfahrer im Fahrzeug über den Kopfhörer beispielsweise ein Musikprogramm hören. Der Kopfhörer kann insbesondere auch Bedienelemente, beispielsweise zur Einstellung bestimmter Funktionen des Rundfunkgerätes oder der Lautstärke beinhalten. Die Übertragung zwischen dem Rundfunkgerät und dem Kopfhörer erfolgt wie zuvor im Zusammenhang mit dem Mobiltelefon beschrieben über die drahtlose Kurzstrecken-Funkverbindung. Weitere Beispiele externer Geräte sind externe Anzeige- und Bedienteile, ein Audio- oder Videogerät oder auch ein Türöffner, beispielsweise für das Garagentor. In letzterem Fall kann dann der Fahrer durch Betätigen einer entsprechenden Taste am Rundfunkgerät über die Kurzstrecken-Funkverbindung ein Signal zum Garagentor aussenden, das einen entsprechenden Empfänger enthält sowie einen Motor zum Schließen und Öffnen des Toren.

Das erfindungsgemäße Verfahren zum Betreiben einer Freisprecheinrichtung eines Kraftfahrzeuges, die in ein Audio- und/oder Informationssystem des Kraftfahrzeuges, insbesondere ein Rundfunkgerät, integriert ist und über eine drahtlose bidirektionale Kurzstrecken-Funkverbindung direkt mit einem Mobiltelefon verbunden ist, weist die folgenden Verfahrensschritte auf:
1. Eine gegenseitige Identifizierung von Rundfunkgerät und Mobiltelefon bei Eintritt des Mobiltelefons in den Funkbereich des Rundfunkgeräts,
2. Schalten der Freisprecheinrichtung in den Bereitschaftmodus,
3. Aktivieren der Freisprecheinrichtung zur Übertragung von ein- oder ausgehenden Mobilfunkdaten zwischen dem Mobiltelefon und dem Rundfunkgerät.

Die Erfindung wird nachfolgend anhand von Ausführungsbeispielen und der Zeichnung näher beschreiben. Es zeigen:
- Figur 1: ein erfindungsgemäßes Kommunikationssystem in der Übersicht
- Figur 2: ein Blockschaltbild mit den wesentlichen Komponenten eines Rundfunkgeräts und eines Mobiltelefons
- Figur 3: ein Flußdiagramm des Verfahrensablaufs

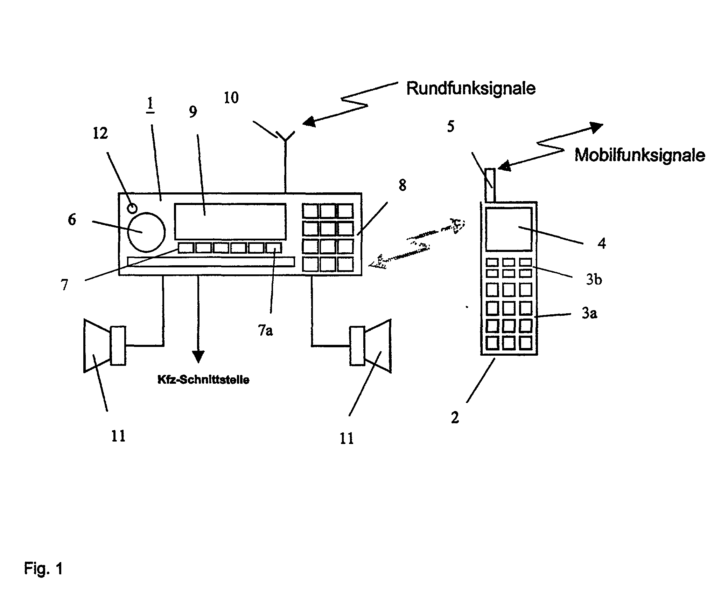

Figur 1 zeigt ein Ausführungsbeispiel eines erfindungsgemäßen Kommunikationssystems in der Übersicht. Das Kommunikationssystem enthält ein Rundfunkgerät 1 und ein Mobiltelefon 2. Das Mobiltelefon 2 weist in an sich bekannter Weise mehrere Bedienelemente 3 und eine Anzeigeeinheit (Display) 4 auf. Über die Bedienelemente 3 erfolgt beispielsweise die Wahl einer Telefonnummer, die Annahme eines eingehenden Telefongesprächs, der Aufruf eines Telefonbuchs usw. Im Display 4 werden beispielsweise die gewählte Telefonnummer und weitere Statusinformationen angezeigt. Der Empfang und das Aussenden von Mobilfunksignalen erfolgt über die Mobilfunkantenne 5.

Das Rundfunkgerät 1 weist mehrere Gruppen von Bedienelementen 6, 7, 8 auf. Über das Bedienelement 6 kann beispielsweise die Lautstärke des Rundfunkgeräts eingestellt werden. Über die Bedienelemente 7 können weitere Funktionen, wie beispielsweise die Auswahl eines abgespeicherten Senders, ausgeführt werden. Die Bedienelemente 8 sind als Nummemblock ausgebildet und entsprechen insoweit den Bedienelementen 3a des Mobiltelefons 2. Über die Bedienelemente 8 kann somit eine Telefonnummer gewählt werden. Der Rundfunkempfänger weist weiterhin eine Anzeigeeinheit (Display) 9 auf. Im Rundfunkbetrieb werden im Display 9 beispielsweise der eingestellte Sender und sonstige Statusinformationen angezeigt. Bei Wahl einer Telefonnummer über die Bedienelemente 8 kann die gewählte Telefonnummer im Display 9 angezeigt werden. Bei einem eingehenden Anruf kann ebenso die Telefonnummer des Anrufenden im Display 9 angezeigt werden. Anstelle der Anzeige der Telefonnummer ist es auch möglich, den Namen des Anrufenden auf dem Display 9 anzuzeigen, wenn eine Zuordnung von Namen und Telefonnummern in einem Speicherelement des Rundfunkempfängers oder des Mobiltelefons abgelegt ist.

Das Rundfunkgerät 1 weist weiterhin eine Rundfunkantenne 10 zum Empfang von Rundfunksignalen auf. Als akustische Ausgabeeinheit sind mit dem Rundfunkgerät 1 Lautsprecher 11 verbunden.

Weiterhin ist in das Rundfunkgerät 1 ein Mikrofon 12 integriert. Über eine Kurzstrecken-Funkverbindung steht das Rundfunkgerät 1 in Verbindung mit dem Mobiltelefon 2, so daß das Rundfunkgerät 1 mit dem Mikrofon 12 und den Lautsprechern 11 als Freisprecheinheit für das Mobiltelefon 2 dient. Die Annahme eines eingehenden Gesprächs am Mobiltelefon 2 kann hierbei durch Betätigen des Bedienelementes 7a am Rundfunkgerät 1 erfolgen. Da darüber hinaus die Anwahl einer Telefonnummer über die Bedienelemente 8 des Rundfunkgerätes 1 erfolgen kann, kann das Mobiltelefon sowohl bei ein- als auch bei ausgehenden Telefongesprächen an einem beliebigen Ort innerhalb des Fahrzeuges plaziert sein. Insbesondere ist es nicht erforderlich, das Mobiltelefon 2 in eine spezielle Halterung zu stecken oder eine Kabelverbindung zwischen dem Mobiltelefon 2 und dem Rundfunkgerät 1 herzustellen.

Während eines Telefongesprächs werden die akustischen Signale der Sprache des Fahrers oder eines Mitfahrers über das Mikrofon 12 in elektrische Signale umgewandelt und über die Kurzstrecken-Funkverbindung zum Mobiltelefon 2 übertragen. Vom Mobiltelefon 2 erfolgt die Übertragung in bekannter Weise über die Mobilfunkantenne 5 zu einer stationären Mobilfunkstation eines Mobilfunksystems. Die eingehenden Sprachsignale des Gesprächspartners werden von der Mobilfunkantenne 5 empfangen und vom Mobiltelefon über die Kurzstrecken-Funkverbindung an das Rundfunkgerät weitergeleitet und dort über die Lautsprecher 11 ausgegeben.

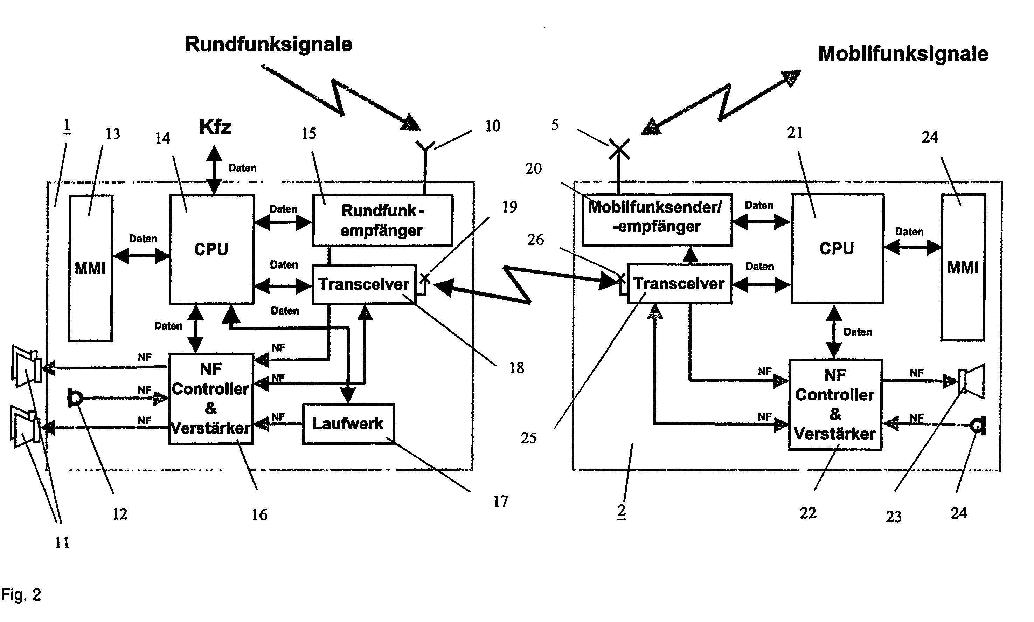

Figur 2 zeigt ein vereinfachtes Blockschaltbild des Rundfunkgerätes 1 und des Mobiltelefons 2. Das Rundfunkgerät 1 enthält eine Bedieneinheit (MMI) 13 die beispielsweise die Bedienelemente 6, 7 und 8 der Figur 1 aufweist. Die Bedieneinheit 13 ist mit einer Mikroprozessoreinheit (CPU) 14 verbunden. Die CPU 14 setzt die von der Bedieneinheit 13 kommenden Signale in Steuerbefehle um. Zum Empfang von Rundfunkprogrammen weist das Rundfunkgerät 1 eine Rundfunkantenne 10 auf, die mit einer Rundfunkempfangseinheit 15 verbunden ist. Die Rundfunkempfangseinheit 15 wird von der CPU 14 angesteuert, beispielsweise zur Auswahl der Rundfunksignale eines bestimmten Senders. In der Rundfunkempfangseinheit 15 werden die Rundfunksignale, die über die Rundfunkantenne 10 empfangen werden, in bekannter Weise in Niederfrequenz- (NF-) Signale umgesetzt. Die Niederfrequenzsignale werden in einem NF-Controller und Verstärker 16 verstärkt und den Lautsprechern 11 zur akustischen Wiedergabe zugeführt. Weiterhin enthält das Rundfunkgerät 1 ein Laufwerk 17, so daß beispielsweise Musik von einer CD oder von einer Musikkassette wiedergegeben werden kann. Das Laufwerk 17 wird ebenfalls von der CPU 14 angesteuert. Die vom Laufwerk 17 ausgegebenen Niederfrequenzsignale werden dem NF-Controller und Verstärker 16 zugeführt und dann ebenfalls über die Lautsprecher 11 ausgegeben. Insoweit handelt es sich bei dem Rundfunkgerät um bekannte Ausführungsformen eines herkömmlichen Autoradios.

Darüber hinaus enthält das Rundfunkgerät 1 eine Sende- und Empfangseinrichtung (Transceiver) 18 mit einer Antenne 19 zur Herstellung einer Kurzstrekken-Funkverbindung zu dem Mobiltelefon 2. Der Transceiver 18 wird ebenfalls von der CPU 14 angesteuert. Der Transceiver 18 ist mit dem NF-Controller und Verstärker 16 verbunden. Somit können vom Mobiltelefon 2 über die Kurzstrekken-Funkverbindung an der Antenne 19 eingehende Sprachsignale über den Transceiver 18 an den NF-Controller und Verstärker 16 weitergeleitet und über die Lautsprecher 11 ausgegeben werden. Sprachsignale des Fahrers oder eine Beifahrers werden von dem Mikrofon 12 aufgefangen und über den NF-Controller und Verstärker 16 dem Transceiver 18 und der Antenne 19 zugeführt und über die Kurzstrecken-Funkverbindung zum Mobiltelefon 2 übertragen.

Das Mobiltelefon 2 weist eine Mobilfunkantenne 5 auf, die mit einer ersten Sende-/Empfangseinheit 20 für Mobilfunksignale verbunden ist. Die Sende-/Empfangseinheit 20 wird von einer CPU 21 angesteuert. Die empfangenen Mobilfunksignale werden in der Sende-/Empfangseinheit 20 in NF-Signale umgewandet, die einem NF-Controller und Verstärker 22 zugeführt werden. Im herkömmlichen Mobilfunkbetrieb erfolgt die Ausgabe der NF-Signale über einen im Mobiltelefon integrierten Lautsprecher 23. Die Sprachsignale des Telefonbenutzers werden im herkömmlichen Betrieb des Telefons über das Mikrofon 24 des Mobiltelefons 2 dem NF-Controller 22 zugeführt und von dort über die Sende-/Empfangseinheit 20 und die Mobilfunkantenne 5 zu einer stationären Mobilfunkstation und schließlich zum Gesprächspartner weitergeleitet. Das Mobiltelefon weist weiterhin in bekannter Weise eine Bedieneinheit 24 zur Wahl einer Telefonnummer und weiterer Telefonfunktionen auf. Ein für das erfindungsgemäße Kommunikationssystem geeignetes Mobiltelefon weist darüber hinaus eine zweite Sende-/Empfangseinheit (Transceiver) 25 auf, die mit einer Antenne 26 verbunden ist. Der Transceiver 25 ist mit dem NF-Controller und Verstärker 22 verbunden und wird von der CPU 21 angesteuert.

Über die Mobilfunkantenne 5 eingehende Mobilfunksignale können somit über die erste Sende-/Empfangseinheit 20 nach Umwandlung in NF-Signale an den NF-Controller und Verstärker 22 weitergeführt und von dort an den Transceiver 25 übermittelt werden. Vom Transceiver 25 werden die NF-Signale über die Antenne 26 über eine Kurzstrecken-Funkverbindung bei einer Frequenz von beispielsweise 2,4 GHz an die Antenne 19 des Rundfunkgerätes 1 übermittelt und von dort in zuvor beschriebener Weise über die Lautsprecher 11 ausgegeben. Umgekehrt werden die von der Antenne 19 des Rundfunkgerätes über die Kurzstrecken-Funkverbindung übermittelten Sprachsignale von der Antenne 26 des Mobiltelefons 2 aufgefangen und über den Transceiver 25 an den NF-Controller weitergegeben. Im Transceiver 25 erfolgt dabei eine Umwandlung der Funksignale in NF-Signale. Vom NF-Controller 22 werden die NF-Signale dann an die erste Sende- und Empfangseinheit 20 weitergegeben. Nach Umwandlung der eingehenden NF-Signale in Mobilfunksignale in der Sende-/Empfangseinheit 20 erfolgt schließlich wieder die Übermittlung zur stationären Mobilfunkstation über die Mobilfunkantenne 5.

Die Transceiver 18 beziehungsweise 25 arbeiten im Ausführungsbeispiel nach dem an sich bekannten Bluetooth-Verfahren. Hierdurch werden Reichweiten der Kurzstrecken-Funkverbindung von typischerweise 10 Meter erreicht, die für die Anwendung im Kraftfahrzeug ausreichend sind. Die Transceiver sind hierbei in Form eines Mikrochips realisiert.

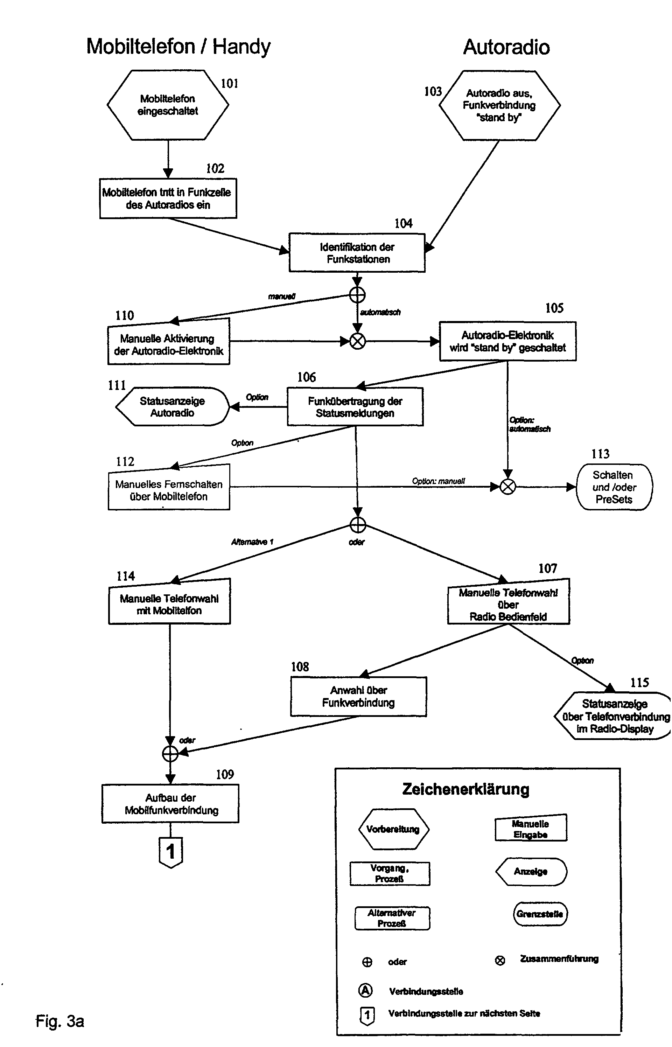

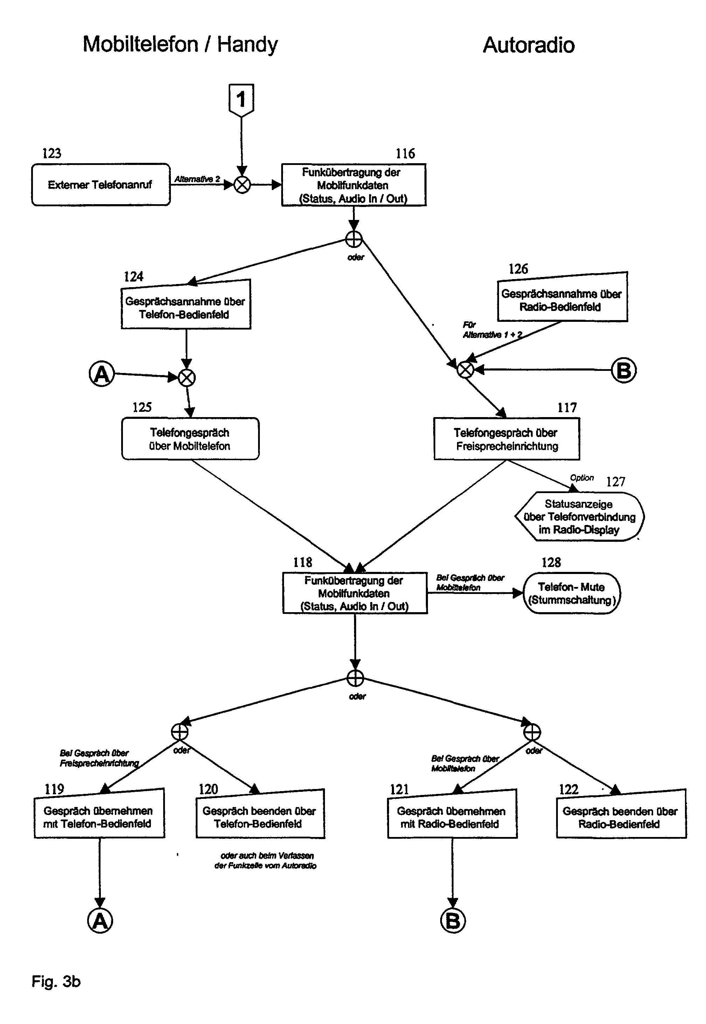

Sowohl im Rundfunkgerät 1 als auch im Mobiltelefon 2 erfolgt die Steuerung der Geräte über die jeweilige CPU 14 beziehungsweise 21. In Figur 3 ist hierzu ein Verfahrensablauf dargestellt, der die Funktion des Rundfunkempfängers und des Mobiltelefons als Kommunikationssystem mit integrierter Freisprecheinrichtung beschreibt. Darüber hinaus werden über die CPU 14 die herkömmlichen Funktionen eines Rundfunkempfängers 1 gesteuert. Analog dazu werden über die CPU 21 auch die herkömmlichen Funktionen eines Mobiltelefons 2 gesteuert.

In Figur 3a und 3b ist exemplarisch der Ablauf des Verfahrens in dem Kommunikationssystems bei ein- oder ausgehenden Telefongesprächen bzw. Datenübertragung dargestellt, wobei die Verbindung zwischen Fig. 3a und 3b an der mit "1" gekennzeichneten Stelle erfolgt. Zur Beschreibung des Verfahrens wird davon ausgegangen, daß das Mobiltelefon eingeschaltet ist (Verfahrensschritt 101). Der Fahrer nähert sich zusammen mit dem Mobiltelefon dem Kraftfahrzeug beziehungsweise betritt das Kraftfahrzeug und tritt damit in die durch die Reichweite der Funkverbindung gegebene Funkzelle des Rundfunkgeräts, das als Autoradio in das Fahrzeug eingebaut ist, ein (Schritt 102). Das Autoradio ist zu diesem Zeitpunkt normalerweise ausgeschaltet, jedoch ist die Kurzstrecken-Funkverbindung im Bereitschaftsmodus (Stand-by, Schritt 103). Nach Eintritt des Fahrers mit dem Mobiltelefon in die Funkzelle des Autoradios erfolgt in Schritt 104 eine gegenseitige Identifikation der Funkstationen im Mobiltelefon und im Autoradio. Nach erfolgreicher Identifikation kann die Autorradioelektronik automatisch in den Stand-by Betrieb geschaltet werden (Schritt 105). Alternativ hierzu ist in Schritt 110 jedoch auch eine manuelle Aktivierung der Autoradioelektronik vorgesehen. Anschließend werden in Schritt 106 Statusmeldungen zwischen dem Mobiltelefon und dem Autoradio übertragen. Will der Fahrer nun ein Telefongespräch führen, so kann er über die Bedienelemente des Rundfunkgerätes die gewünschte Telefonnummer wählen (Schritt 107). Anschließend erfolgt in Schritt 108 die Anwahl der Telefonnummer über die Kurzstrecken-Funkverbindung zum Mobiltelefon. Alternativ hierzu kann in Schritt 114 auch am Mobiltelefon direkt die Telefonnummer gewählt werden.

Anschließend erfolgt in Schritt 109 der Aufbau der Mobilfunkverbindung. In Schritt 116 erfolgt anschließend die Funkübertragung der Mobilfunkdaten. Das Telefongespräch kann dabei über die Freisprecheinrichtung die im Rundfunkgerät integriert ist, geführt werden (Schritt 117). Das Telefongespräch kann aber auch alternativ über das Mobiltelefon geführt werden (Schritt 125). Durch entsprechende Tastenbetätigung am Rundfunkgerät beziehungsweise am Mobiltelefon kann dabei zwischen Gesprächsführung über die Freisprecheinrichtung beziehungsweise über das Mobiltelefon umgeschaltet werden. Auch nach einer solchen Umschaltung erfolgt weiterhin die Funkübertragung der Mobilfunkdaten zur stationären Mobilfunkstation (Schritt 118). Die Übernahme des Telefongesprächs mit dem Mobiltelefon kann bei einem zunächst über die Freisprecheinrichtung geführten Gespräch durch Betätigen eines entsprechenden Bedienelementes des Mobiltelefons im Schritt 119 erfolgen. Wird das Gespräch über das Mobiltelefon geführt, so kann eine Übernahme des Gesprächs zur Freisprecheinrichtung durch Betätigen eines entsprechenden Bedienelementes am Rundfunkgerät in Schritt 121 erfolgen. Das Telefongespräch kann sowohl über ein Bedienelement des Mobiltelefons (Schritt 120) oder über ein Bedienelement des Rundfunkgerätes (Schritt 122) beendet werden.

Geht ein externer Telefonanruf am Mobiltelefon 2 ein (Schritt 123), so erfolgt zunächst eine Statusübertragung zum Rundfunkgerät, so daß eine akustische und/oder optische Signalisierung erfolgt. Der Fahrer kann nun über ein Bedienelement des Rundfunkgeräts das eingehende Telefongespräch annehmen (Schritt 126). Das Telefongespräch wird hierbei über die Freisprecheinrichtung geführt (Schritt 117) und die Mobilfunkdaten werden übertragen (Schritt 118). Alternativ kann in Schritt 124 die Gesprächsannahme auch über ein Bedienelement des Mobiltelefons erfolgen und das Telefongespräche über das Mobiltelefon geführt werden (Schritt 125). Das Beenden das Gesprächs beziehungsweise die Übernahme des Gesprächs am Mobiltelefon beziehungsweise an der Freisprecheinrichtung erfolgt wie zuvor beschrieben in den Verfahrensschritten 119 bis 122.

Wesentliche Schritte des erfindungsgemäßen Verfahrens sind somit die gegenseitige Identifikation der Funkstationen bei Eintritt des Mobiltelefons in den Funkbereich des Rundfunkgerätes, sowie das Einschalten des Bereitschaftsmodus der Freisprecheinrichtung, das Übertragen von Statusmeldungen über die Kurzstrecken-Funkverbindung und das Aktivieren der Freisprecheinrichtung zur Übertragung von ein- oder ausgehenden Mobilfunkdaten oder Gesprächen zwischen dem Mobiltelefon und dem Rundfunkgerät. Von wesentlicher Bedeutung ist darüber hinaus das wahlweise Annehmen oder Führen von Telefongesprächen sowohl am Mobiltelefon als auch an der Freisprecheinrichtung im Rundfunkgerät.

Darüber hinaus gibt es noch eine Vielzahl von Modifikationen und Optionen des Verfahrens. Beispielsweise muß in Schritt 103 die Funkverbindung nicht ständig in den Stand-by Betrieb geschaltet sein. Vielmehr kann das Einschalten des Stand-by Betriebs zum Beispiel dann erfolgen, wenn über die Zentralverriegelung die Fahrzeugtüren geöffnet werden oder die Zündung des Kraftfahrzeuges eingeschaltet wird.

In einer besonderen Ausgestaltung der Erfindung ist es möglich, daß bestimmte Einstellungen am Fahrzeug beziehungsweise an Geräten im Fahrzeug vorgenommen werden, nachdem in Schritt 105 die Autoradioelektronik in den Stand-by Betrieb geschaltet wird. Beispiele für solche automatischen, vordefinierten Schaltvorgänge sind beispielsweise das Ein- beziehungsweise Ausschalten der Freisprechfunktion, die Wahl einer bestimmten Stationstaste am Rundfunkgerät und damit eines bestimmten Rundfunksenders, spezielle Audioeinstellungen oder die Deaktivierung einer Diebstahlsicherung des Autoradios. Am Fahrzeug direkt kann es sich um die Aktivierung der Zentralverriegelung mit automatischer Entriegelung der Fahrzeugtüren, eine spezielle Sitzeinstellung oder die Deaktivierung der Fahrzeugdiebstahlsicherung handeln. Diese Funktionen können sowohl automatisch vorgenommen werden oder auch manuell über das Mobiltelefon ferngeschaltet werden (Schritt 112).

In weiteren speziellen Ausgestaltungen können Statusanzeigen des Rundfunkgerätes oder der Telefonverbindung im Display des Rundfunkgerätes angezeigt werden (Schritt 111 beziehungsweise 115, 127). Weiterhin ist vorgesehen, daß die Freisprecheinrichtung stumm geschaltet wird, wenn das Telefongespräch über das Mobiltelefon geführt wird (Schritt 128).

## Patentansprüche

1. Kommunikationssystem für ein Kraftfahrzeug mit
- einem Mobiltelefon (2) mit einer ersten Sende-/Empfangseinrichtung (20) zur Kommunikation auf einer ersten Funkverbindung zwischen dem Mobiltelefon (2) und einer stationären Sende-/Empfangsanlage eines Mobilfunksystems,
- einem im Kraftfahrzeug eingebauten Audio- und/oder Informationssystems mit einer Empfangseinrichtung und einer akustischen Ausgabeeinheit (11) sowie einem Mikrofon (12) zur Realisierung einer Freisprechfunktion,
wobei eine Gesprächs- und / oder Datenübertragung zwischen dem Mobiltelefon (2) und dem Audio- und/oder Informationssystem über eine drahtlose Verbindung erfolgt und am Mobiltelefon (2) eingehende Gespräche über die akustische Ausgabeeinheit (11) ausgebbar sind und in das Mobiltelefon (2) eine zweite Sende-/Empfangseinrichtung (25) integriert ist, **dadurch gekennzeichnet, dass** das Audio- und/oder Informationssystem neben der Empfangseinrichtung auch eine Sendeeinrichtung zur Herstellung einer zweiten Funkverbindung als bidirektionale Kurzstrecken-Funkverbindung zwischen der zweiten Sende-/Empfangseinrichtung (25) des Mobiltelefons und dem Audio- und/oder Informationssystem enthält und das Mobiltelefon und das Audio und/oder Informationssystem jeweils als eigenständige geräte ausgebildet sind.

2. Kommunikationssystem nach Anspruch 1, **dadurch gekennzeichnet, daß** die Übertragung über die Kurzstrecken-Funkverbindung auf anderen Frequenzen oder mit einem anderen Übertragungsverfahren erfolgt als die Übertragung auf der ersten Funkverbindung.

3. Kommunikationssystem nach Anspruch 1 oder 2, **dadurch gekennzeichnet, daß** die Übertragung über die Kurzstrecken-Funkverbindung bei Frequenzen von mehr als 2 GHz erfolgt.

4. Kommunikationssystem nach einem der vorhergehenden Ansprüche, **dadurch gekennzeichnet, daß** die Reichweite der Kurzstrecken-Funkverbindung nicht mehr als 100m, vorzugsweise etwa 10m, beträgt.

5. Kommunikationssystem nach einem der vorhergehenden Ansprüche, **dadurch gekennzeichnet, daß** es sich bei dem Audiosystem um ein Rundfunkgerät handelt, das eine weitere Empfangseinheit (15) zum Empfang von Rundfunksignalen aufweist, wobei die Gesprächs- und / oder Datenübertragung zwischen dem Mobiltelefon (2) und dem Rundfunkgerät (1) auf Frequenzen außerhalb der Frequenzbänder der Rundfunksignale erfolgt.

6. Kommunikationssystem nach einem der vorhergehenden Ansprüche, **dadurch gekennzeichnet, daß** es sich bei dem Informationssystem um ein Navigations- oder Telematiksystem handelt.

7. Kommunikationssystem nach einem der vorhergehenden Ansprüche, **dadurch gekennzeichnet, daß** die Sendeeinheit des Audio- und / oder Informationssystems mit einem Mikrofon (12) verbunden ist.

8. Kommunikationssystem nach Anspruch 7, **dadurch gekennzeichnet, daß** das Mikrofon (12) fest im Fahrzeug installiert ist, insbesondere in das Audio- und / oder Informationssystem integriert ist.

9. Kommunikationssystem nach einem der Ansprüche 7 bis 8, **dadurch gekennzeichnet, daß** das Mikrofon (12) als Richtmikrofon ausgebildet ist.

10. Kommunikationssystem nach Anspruch 7, **dadurch gekennzeichnet, daß** das Mikrofon (12) über eine drahtlose Verbindung mit dem Audio- und / oder Informationssystem verbunden ist.

11. Kommunikationssystem nach einem der vorhandenen Ansprüche, **dadurch gekennzeichnet, daß** die Gesprächs- oder Datenübertragung zwischen dem Mobiltelefon (2) und dem Audio- und / oder Informationssystem nach dem Bluetooth-Verfahren erfolgt.

12. Kommunikationssystem nach einem der vorhergehenden Ansprüche, **dadurch gekennzeichnet, daß** das Audio- und / oder Navigationssystem mindestens ein Bedienelement (7a) zur Annahme eines am Mobiltelefon eingehenden Anrufs aufweist.

13. Kommunikationssystem nach einem der vorhergehenden Ansprüche, . **dadurch gekennzeichnet, daß** das Mobiltelefon über Bedienelemente (7a, 8) des Audio- und / oder Informationssystems bedienbar ist.

14. Kommunikationssystem nach einem der vorhergehenden Ansprüche, **dadurch gekennzeichnet, daß** das Audio- und / oder Informationssystems über Bedienelemente (3) des Mobiltelefons bedienbar ist.

15. Kommunikationssystem nach einem der vorhergehenden Ansprüche, **dadurch gekennzeichnet, daß** das Audio- und / oder Informationssystem zur Verarbeitung von Sprachbefehlen mit einem Spracherkennungssystem verbunden oder ausgerüstet ist.

16. Kommunikationssystem nach Anspruch 15, **dadurch gekennzeichnet, daß** das Spracherkennungssystem in das Mobiltelefon (2) integriert ist.

17. Kommunikationssystem nach einem der vorhergehenden Ansprüche, **dadurch gekennzeichnet, daß** das Audiosystem mit einem Navigationssystem verbunden ist oder ein Navigationssystem enthält.

18. Kommunikationssystem nach Anspruch 17, **dadurch gekennzeichnet, daß** das Audiosystem zur Weiterleitung von über das Rundfunkgerät oder das Mobiltelefon empfangene Verkehrs-, Fahr- oder Routeninformationen an das Navigationssystem ausgelegt ist.

19. Kommunikationssystem nach einem der vorhergehenden Ansprüche, **dadurch gekennzeichnet, daß** mit dem Mobiltelefon (2) Fahrzeugfunktionen steuerbar sind.

20. Kommunikationssystem nach einem der vorhergehenden Ansprüche, **dadurch gekennzeichnet, daß** das Mobiltelefon (2) Mittel zur Positionsbestimmung enthält, die für Funktionen des Audio- und / oder Informationssystems, wie die Filterung von Verkehrsinformationen oder das Aussenden eines Notrufs, genutzt werden.

21. Rundfunkgerät (1) für ein Kraftfahrzeug mit einer Eingabeeinheit (13), einer Empfangseinrichtung (10, 15) zum Empfang von Rundfunksignalen innerhalb bestimmter Frequenzbänder und Mitteln (15, 16) zur Umsetzung der empfangenen Rundfunksignale in akustische Signale über eine akustische Ausgabeeinheit (11), **dadurch gekennzeichnet, dass** das Rundfunkgerät als eigenständiges gerät ausgebildet ist und in das Rundfunkgerät (1) zusätzlich eine weitere Empfangseinheit und eine mit der weiteren Empfangseinheit in Verbindung stehende Sen-deeinheit integriert sind, wobei die Empfangseinheit und die weitere Sendeeinheit zur drahtlosen Anbindung eines eigenständigen externen Gerätes über eine bidirektionale Kurzstrecken-Funkverbindung ausgelegt sind und die Ausgabe von über die weitere Empfangseinheit empfangenen Sprachsignalen über die akustische Ausgabeeinheit (11) erfolgt und die Übertragung mittels der Kurzstrecken-Funkverbindung außerhalb der Frequenzbänder der Rundfunksignale erfolgt.

22. Rundfunkgerät nach Anspruch 21, **dadurch gekennzeichnet, daß** die Übertragung über die Kurzstrecken-Funkverbindung bei Frequenzen von mehr als 2 GHz erfolgt.

23. Rundfunkgerät nach Anspruch 21 oder 22, **dadurch gekennzeichnet, daß** die Reichweite der Kurzstrecken-Funkverbindung nicht mehr als 100m, vorzugsweise etwa 10m, beträgt.

24. Rundfunkgerät nach Anspruch 21, **dadurch gekennzeichnet, daß** die Sendeeinrichtung des Rundfunkempfängers mit einem Mikrofon (12) verbunden ist.

25. Rundfunkgerät nach Anspruch 24, **dadurch gekennzeichnet, daß** das Mikrofon (12) in das Rundfunkgerät integriert ist.

26. Rundfunkgerät nach Anspruch 24, **dadurch gekennzeichnet, daß** das Mikrofon (12) als Richtmikrofon ausgebildet ist.

27. Rundfunkgerät nach Anspruch 24, **dadurch gekennzeichnet, daß** die Übertragung des MikrofonsignaJs zur Sendeeinrichtung drahtlos erfolgt.

28. Rundfunkgerät nach einem der vorhergehenden Ansprüche 21 bis 27, **dadurch gekennzeichnet, daß** es sich bei dem externen Gerät um ein Mobilfunktelefon (2) handelt und das Rundfunkgerät als Freisprecheinrichtung einsetzbar ist.

29. Rundfunkgerät nach Anspruch 28, **dadurch gekennzeichnet, daß** das Rundfunkgerät mindestens ein Bedienelement (7a) zur Annahme eines am Mobiltelefon (2) eingehenden Anrufs aufweist.

30. Rundfunkgerät nach einem der vorhergehenden Ansprüche 21 bis 29, **dadurch gekennzeichnet, daß** es sich bei dem externen Gerät um einen Personal-Computer, einen Kopfhörer mit oder ohne Bedienelemente, ein externes Anzeige- oder Bedienteil, ein Audio- oder Videogerät, oder einen Toröffner handelt.

31. Rundfunkgerät nach einem der vorhergehenden Ansprüche 21 bis 30, **dadurch gekennzeichnet, daß** die Sprach- oder Datenübertragung nach dem Bluetooth-Verfahren erfolgt.

32. Rundfunkgerät nach einem der vorhergehenden Ansprüche 21 bis 31, **dadurch gekennzeichnet, daß** das Rundfunkgerät Bedienelemente (7, 8) zur Bedienung des externen Geräts aufweist.

33. Rundfunkgerät nach einem der vorhergehenden Ansprüche 21 bis 32, **dadurch gekennzeichnet, daß** das Rundfunkgerät zur Verarbeitung von Sprachbefehlen mit einem Spracherkennungssystem ausgerüstet oder verbunden ist.

34. Rundfunkgerät nach Anspruch 33, **dadurch gekennzeichnet, daß** das Spracherkennungssystem in das externe Gerät integriert ist.

35. Rundfunkgerät nach einem der vorhergehenden Ansprüche 21 bis 34, **dadurch gekennzeichnet, daß** das Rundfunkgerät mit einem Navigationssystem verbunden ist oder ein Navigationssystem enthält.

36. Rundfunkgerät nach Anspruch 35, **dadurch gekennzeichnet, daß** das Rundfunkgerät zur Weiterleitung von über das Rundfunkgerät oder das externe Gerät empfangene Verkehrs-, Fahr- oder Routeninformationen an das Navigationssystem ausgelegt ist.

37. Verfahren zum Betreiben einer Freisprecheinrichtung für ein Kraftfahrzeug, die in ein Audio- und/oder Informationssystem des Kraftfahrzeugs, insbesondere ein Rundfunkgerät (1), integriert ist und über eine drahtlose, bidirektionale Kurzstrecken-Funkverbindung direkt mit einem eigenständigen Mobiltelefon (2) verbunden werden kann, mit den Verfahrensschritten:
- gegenseitige Identifikation von Rundfunkgerät (1) und Mobiltelefon (2) bei Eintritt des Mobiltelefons (2) in den Funkbereich des Rundfunkgeräts (1),
- Freisprecheinrichtung in Bereitschaftsmodus schalten,
- Übertragen von Statusmeldungen über die Kurzstrecken-Funkverbindung,
- Aktivieren der Freisprecheinrichtung zur Übertragung von ein- oder ausgehenden Mobilfunkdaten oder -gesprächen zwischen dem Mobiltelefon (2) und dem Rundfunkgerät (1).

38. Verfahren nach Anspruch 37, **dadurch gekennzeichnet, daß** die Freisprecheinrichtung automatisch in den Bereitschaftsmodus geschaltet wird.

39. Verfahren nach Anspruch 37 oder 38, **dadurch gekennzeichnet, daß** eine Telefonwahl über Bedienelemente (8) am Audio- und / oder Informationssystem erfolgen kann.

40. Verfahren nach einem der Ansprüche 37 bis 39, **dadurch gekennzeichnet, daß** ein eingehendes Telefongespräch über ein Bedienelement (7a) des Audio- und / oder Informationssystems angenommen werden kann.

41. Verfahren nach einem der Ansprüche 37 bis 40, **dadurch gekennzeichnet, daß** eine Gesprächsübergabe zwischen Mobiltelefon (2) und Freisprecheinrichtung oder umgekehrt möglich ist.

42. Verfahren nach einem der Ansprüche 37 bis 41, **dadurch gekennzeichnet, daß** die Freisprecheinrichtung stumm geschaltet wird, wenn das Telefongespräch am Mobiltelefon (2) angenommen oder an das Mobiltelefon (2) übergeben wird.

43. Verfahren nach einem der Ansprüche 37 bis 42, **dadurch gekennzeichnet, daß** die Kurzstrecken-Funkverbindung auf anderen Frequenzen oder mit einem anderen Übertragungsverfahren erfolgt als die Funkverbindung zwischen dem Mobiltelefon (2) und einer stationären Sende-/Empfangsanlage eines Mobilfunksystems.

44. Verfahren nach einem der Ansprüche 37 bis 43, **dadurch gekennzeichnet, daß** die Kurzstrecken-Funkverbindung außerhalb der Frequenzbänder von Rundfunkübertragungen erfolgt.

45. Verfahren nach einem der Ansprüche 37 bis 44, **dadurch gekennzeichnet, daß** die Übertragung über die Kurzstrecken-Funkverbindung bei Frequenzen von mehr als 2 GHz erfolgt.

46. Verfahren nach einem der Ansprüche 37 bis 45, **dadurch gekennzeichnet, daß** die Kurzstrecken-Funkverbindung nach dem Bluetooth-Verfahren erfolgt.

47. Verfahren nach einem der Ansprüche 37 bis 46, **dadurch gekennzeichnet, daß** die Telefonnummer des Anrufenden an das Audio- und / oder Informationssystem übermittelt wird und auf einer Anzeigeeinheit ausgegeben wird.

48. Verfahren nach einem der Ansprüche 37 bis 47, **dadurch gekennzeichnet, daß** nach Identifizierung der Funkstationen automatisch Voreinstellungen von Fahrzeugkomponenten vorgenommen werden.

## Claims

1. Communications system for a motor vehicle, having
- a mobile phone (2) with a first transceiver (20) for communicating on a first radio link between the mobile phone (2) and a stationary transceiver system of a mobile radio system,
- an audio and/or information system which is installed in the motor vehicle and has a receiver and an audio output unit (11) and a microphone (12) for implementing a hands-free function, a voice transmission and/or data transmission taking place between the mobile phone (2) and the audio and/or information system over a wireless link, and it being possible to output voice calls which are received at the mobile phone (2) via the audio output unit (11), and a second transceiver (25) being integrated into the mobile phone (2), **characterized in that** the audio and/or information system contains not only the receiver but also a transmitter for setting up a second radio link as a bidirectional short-range radio link between the second transceiver (25) of the mobile phone and the audio or information system, and the mobile phone and the audio and/or information system are each constructed as an independent device.

2. Communications system according to Claim 1, **characterized in that** the transmission over the short-range radio link takes place on different frequencies or with a different transmission method than the transmission on the first radio link.

3. Communications system according to Claim 1 or 2, **characterized in that** the transmission over the short-range radio link takes place at frequencies of more than 2 GHz.

4. Communications system according to one of the preceding claims, **characterized in that** the range for the short-range radio link is not more than 100 m, preferably approximately 10 m.

5. Communications system according to one of the preceding claims, **characterized in that** the audio system is a radio unit which has a further receiver unit (15) for receiving radio signals, the voice transmission and/or data transmission between the mobile phone (2) and the radio unit (1) taking place on frequencies outside the frequency bands of the radio signals.

6. Communications system according to one of the preceding claims, **characterized in that** the information system is a navigation system or telematic system.

7. Communications system according to one of the preceding claims, **characterized in that** the transmitter unit of the audio and/or information system is connected to a microphone (12).

8. Communications system according to Claim 7, **characterized in that** the microphone (12) is permanently installed in the vehicle, in particular integrated into the audio and/or information system.

9. Communications system according to one of Claims 7 to 8, **characterized in that** the microphone (12) is embodied as a directional microphone.

10. Communications system according to Claim 7, **characterized in that** the microphone (12) is connected to the audio and/or information system by means of a wireless link.

11. Communications system according to one of the preceding claims, **characterized in that** the voice transmission or data transmission between the mobile phone (2) and the audio and/or information system is carried out according to the Bluetooth method.

12. Communications system according to one of the preceding claims, **characterized in that** the audio and/or navigation system has at least one control element (7a) for accepting a call which is received at the mobile phone.

13. Communications system according to one of the preceding claims, **characterized in that** the mobile phone is capable of being operated by means of control elements (7a, 8) of the audio and/or information system.

14. Communications system according to one of the preceding claims, **characterized in that** the audio and/or information system is capable of being operated by means of control elements (3) of the mobile phone.

15. Communications system according to one of the preceding claims, **characterized in that** the audio and/or information system is connected to, or equipped with, a voice recognition system, in order to process voice commands.

16. Communications system according to Claim 15, **characterized in that** the voice recognition system is integrated into the mobile phone (2).

17. Communications system according to one of the preceding claims, **characterized in that** the audio system is connected to a navigation system or contains a navigation system.

18. Communications system according to Claim 17, **characterized in that** the audio system is configured to pass on to the navigation system traffic, driving or route information received via the radio unit or the mobile phone.

19. Communications system according to one of the preceding claims, **characterized in that** vehicle functions can be controlled using the mobile phone (2).

20. Communications system according to one of the preceding claims, **characterized in that** the mobile phone (2) contains position-determining means which are used for functions of the audio and/or information system, such as filtering traffic information or emitting an emergency call.

21. Radio unit (1) for a motor vehicle having an input unit (13), a receiver (10, 15) for receiving radio signals within specific frequency bands and means (15, 16) for converting the received radio signals into audio signals by means of an audio output unit (11), **characterized in that** the radio unit is constructed as an independent device and a further receiver unit and a transmitter unit which is connected to the further receiver unit are additionally integrated into the radio unit (1), the receiver unit and the further transmitter unit being configured to connect an independent external device in wireless fashion over a bidirectional short-range radio link, and voice signals which are received by means of the further receiver unit being output by means of the audio output unit (11), and the transmission using the short-range radio link taking place outside the frequency bands of the radio signals.

22. Radio unit according to Claim 21, **characterized in that** the transmission over the short-range radio link takes place at frequencies of more than 2 GHz.

23. Radio unit according to Claim 21 or 22, **characterized in that** the range for the short-range radio link is not more than 100 m, preferably approximately 10 m.

24. Radio unit according to Claim 21, **characterized in that** the transmitter device of the radio receiver is connected to a microphone (12).

25. Radio unit according to Claim 24, **characterized in that** the microphone (12) is integrated into the radio unit.

26. Radio unit according to Claim 24, **characterized in that** the microphone (12) is embodied as a directional microphone.

27. Radio unit according to Claim 24, **characterized in that** the transmission of the microphone signal to the transmitter takes place in wireless fashion.

28. Radio unit according to one of the preceding Claims 21 to 27, **characterized in that** the external unit is a mobile phone (2) and the radio unit can be used as a hands-free device.

29. Radio unit according to Claim 28, **characterized in that** the radio unit has at least one control element (7a) for accepting a call which is received at the mobile phone (2).

30. Radio unit according to one of the preceding Claims 21 to 29, **characterized in that** the external device is a personal computer, a headset with or without control elements, an external display component or control component, an audio or video device or a door opener.

31. Radio unit according to one of the preceding Claims 21 to 30, **characterized in that** the voice transmission or data transmission is carried out according to the Bluetooth method.

32. Radio unit according to one of the preceding Claims 21 to 31, **characterized in that** the radio unit has control elements (7, 8) for operating the external device.

33. Radio unit according to one of the preceding Claims 21 to 32, **characterized in that** the radio unit is equipped with, or connected to, a voice recognition system, in order to process voice commands.

34. Radio unit according to Claim 33, **characterized in that** the voice recognition system is integrated into the external device.

35. Radio unit according to one of the preceding Claims 21 to 34, **characterized in that** the radio unit is connected to a navigation system or contains a navigation system.

36. Radio unit according to Claim 35, **characterized in that** the radio unit is configured to pass on to the navigation system traffic, driving or route information which is received via the radio unit or the external device.

37. Method for operating a hands-free device for a motor vehicle which is integrated into an audio and/or information system of the motor vehicle, in particular a radio unit (1), and can be connected directly to an independent mobile phone (2) over a wireless, bidirectional short-range radio link, having the method steps:
- mutual identification of radio unit (1) and a mobile phone (2) when the mobile phone (2) enters the radio coverage area of the radio unit (1),
- switching hands-free device to standby mode,
- transmission of status messages over the short-range radio link,
- activation of the hands-free device for the transmission of incoming or outgoing mobile radio data or voice calls between the mobile phone (2) and the radio unit (1).

38. Method according to Claim 37, **characterized in that** the hands-free device is switched automatically to the standby mode.

39. Method according to Claim 37 or 38, **characterized in that** telephone dialling can be carried out by means of control elements (8) on the audio and/or information system.

40. Method according to one of Claims 37 to 39, **characterized in that** an incoming telephone call can be accepted by means of a control element (7a) of the audio and/or information system.

41. Method according to one of Claims 37 to 40, **characterized in that** a voice call transfer between the mobile phone (2) and hands-free device, or vice versa, is possible.

42. Method according to one of Claims 37 to 41, **characterized in that** the hands-free device is switched to a mute setting if the telephone call is accepted at the mobile phone (2) or transferred to the mobile phone (2).

43. Method according to one of Claims 37 to 42, **characterized in that** the short-range radio link is effected on different frequencies or with a different transmission method than the radio link between the mobile phone (2) and a stationary transceiver system of a mobile radio system.

44. Method according to one of Claims 37 to 43, **characterized in that** the short-range radio link is effected outside the frequency bands of radio effected outside the frequency bands of radio transmissions.

45. Method according to one of Claims 37 to 44, **characterized in that** the transmission over the short-range radio link takes place at frequencies of more than 2 GHz.

46. Method according to one of Claims 37 to 45, **characterized in that** the short-range radio link is carried out according to the Bluetooth method.

47. Method according to one of Claims 37 to 46, **characterized in that** the telephone number of the calling party is communicated to the audio and/or information system and is output on a display unit.

48. Method according to one of Claims 37 to 47, chacterized in that, after identification of the radio stations, vehicle components are preset automatically.

## Revendications

1. Système de communication pour un véhicule équipé
- d'un téléphone mobile (2) muni d'un premier émetteur-récepteur (20) pour la communication sur une première liaison radio entre le téléphone mobile (2) et une installation émettrice/réceptrice stationnaire d'un système de téléphone mobile,
- d'un système audio et/ou d'information monté dans le véhicule équipé d'un récepteur et d'une unité de sortie acoustique (11) ainsi que d'un microphone (12) pour la réalisation d'une fonction mains libres, une transmission d'appels et/ou de données s'effectuant entre le téléphone mobile (2) et le système audio et/ou d'information au moyen d'une liaison sans fil et les appels arrivant sur le téléphone mobile (2) pouvant être émis par l'unité de sortie acoustique (11) et un second émetteur/récepteur (25) étant intégré dans le téléphone mobile (2), **caractérisé en ce que** le système audio et/ou d'information contient également, à côté du récepteur, un émetteur pour l'établissement d'une seconde liaison radio comme liaison radio bidirectionnelle sur courtes distances entre le second émetteur/récepteur (25) du téléphone mobile et le système audio et/ou d'information étant chacun conçus comme des appareils autonomes.

2. Système de communication selon la revendication 1, **caractérisé en ce que** la transmission par la liaison radio sur courtes distances s'effectue sur d'autres fréquences ou selon un autre mode de transmission que la transmission sur la première liaison radio.

3. Système de communication selon la revendication 1 ou 2, **caractérisé en ce que** la transmission par la liaison radio sur courtes distances s'effectue à des fréquences supérieures à 2 GHz.

4. Système de communication selon l'une des revendications précédentes, **caractérisé en ce que** la portée de la liaison radio sur courtes distances ne dépasse pas 100 m et atteint de préférence env. 10 m.

5. Système de communication selon l'une des revendications précédentes,
**caractérisé en ce que** le système audio est un poste radio présentant une unité réceptrice (15) supplémentaire pour la réception de signaux radio, la transmission d'appels et/ou de données entre le téléphone mobile (2) et le poste radio (1) s'effectuant sur des fréquences extérieures aux bandes de fréquences des signaux radio.

6. Système de communication selon l'une des revendications précédentes, **caractérisé en ce que** le système d'information est un système de navigation ou télématique.

7. Système de communication selon l'une des revendications précédentes, **caractérisé en ce que** l'unité émettrice du système audio et/ou d'information est reliée à un microphone (12).

8. Système de communication selon la revendication 7, **caractérisé en ce que** le microphone (12) est installé à demeure dans le véhicule, et qu'il est notamment intégré dans le système audio et/ou d'information.

9. Système de communication selon l'une des revendications 7 à 8, **caractérisé en ce que** le microphone (12) est conçu comme microphone directionnel.

10. Système de communication selon la revendication 7, **caractérisé en ce que** le microphone (12) est relié au système audio et/ou au système d'information par une liaison sans fil.

11. Système de communication selon l'une des revendications précédentes, **caractérisé en ce que** la transmission d'appels ou de données entre le téléphone mobile (2) et le système audio et/ou d'information s'effectue d'après le procédé bluetooth.

12. Système de communication selon l'une des revendications précédentes, **caractérisé en ce que** le système audio et/ou de navigation présente au moins un organe de commande (7a) pour la réception d'un appel arrivant sur le téléphone mobile.

13. Système de communication selon l'une des revendications précédentes, **caractérisé en ce que** le téléphone mobile peut être commandé par des organes de commande (7a, 8) du système audio et/ou d'information.

14. Système de communication selon l'une des revendications précédentes, **caractérisé en ce que** le système audio et/ou d'information peut être commandé par des organes de commandes (3) du téléphone mobile.

15. Système de communication selon l'une des revendications précédentes, **caractérisé en ce que** le système audio et/ou d'information est relié à ou équipé d'un système de reconnaissance vocale pour le traitement des instructions vocales.

16. Système de communication selon la revendication 15, **caractérisé en ce que** le système de reconnaissance vocale est intégré dans le téléphone mobile (2).

17. Système de communication selon l'une des revendications précédentes, **caractérisé en ce que** le système audio est relié à un système de navigation ou contient un système de navigation.

18. Système de communication selon la revendication 17, **caractérisé en ce que** le système audio est conçu pour la retransmission au système de navigation d'informations routières, sur le trafic ou sur le trajet reçu par le poste radio ou le téléphone mobile.

19. Système de communication selon l'une des revendications précédentes, **caractérisé en ce que** des fonctions du véhicule peuvent être commandées par le téléphone mobile (2).

20. Système de communication selon l'une des revendications précédentes, **caractérisé en ce que** le téléphone mobile (2) contient des moyens pour déterminer la position, qui sont utilisés pour des fonctions du système audio et/ou d'information, comme le filtrage d'informations routières ou l'émission d'un appel de secours.

21. Poste radio (1) pour un véhicule équipé d'une unité d'entrée (13) d'un récepteur (10, 15) pour la réception de signaux radio à l'intérieur de bandes de fréquences précises et de moyens (15, 16) de conversion des signaux radio reçus en signaux acoustiques au moyen d'une unité de sortie acoustique (11), **caractérisé en ce que** le poste radio est conçu comme un appareil autonome et **en ce qu'**une unité réceptrice supplémentaire et une unité émettrice en liaison avec l'unité réceptrice supplémentaire sont intégrées dans l'appareil radio (1), l'unité réceptrice et l'unité émettrice supplémentaire étant conçues pour la connexion sans fil d'un appareil extérieur autonome au moyen d'une liaison radio bidirectionnelle sur courtes distances, et l'émission de signaux vocaux reçus par l'unité réceptrice supplémentaire s'effectuant par l'unité de sortie acoustique (11) et la transmission au moyen de la liaison radio sur courtes distances s'effectuant à l'extérieur des bandes de fréquences des signaux radio.

22. Poste radio selon la revendication 21, **caractérisé en ce que** la transmission par la liaison radio sur courtes distances s'effectue à des fréquences supérieures à 2 GHz.

23. Poste radio selon la revendication 21 ou 22, **caractérisé en ce que** la portée de la liaison radio sur courtes distances ne dépasse pas 100 m et atteint de préférence env. 10 m.

24. Poste radio selon la revendication 21, **caractérisé en ce que** l'émetteur du récepteur radio est relié à un microphone (12).

25. Poste radio selon la revendication 24, **caractérisé en ce que** le microphone (12) est intégré dans le poste radio.

26. Poste radio selon la revendication 24, **caractérisé en ce que** le microphone (12) est conçu comme microphone bidirectionnel.

27. Poste radio selon la revendication 24, **caractérisé en ce que** la transmission du signal du microphone à l'émetteur s'effectue sans fil.

28. Poste radio selon l'une des revendications précédentes 21 à 27, **caractérisé en ce que** l'appareil extérieur est un téléphone mobile (2) et que le poste radio est utilisable comme dispositif mains libres.

29. Poste radio selon la revendication 28, **caractérisé en ce que** le poste radio présente au moins un organe de commande (7a) pour la réception d'un appel arrivant sur le téléphone mobile (2).

30. Poste radio selon l'une des revendications précédentes 21 à 29, **caractérisé en ce que** l'appareil extérieur est un ordinateur personnel, un écouteur avec ou sans organe de commande, une partie affichage ou de commande extérieure, un appareil audio ou vidéo, ou un dispositif d'ouverture de portail.

31. Poste radio selon l'une des revendications précédentes 21 à 30, **caractérisé en ce que** la transmission vocale ou de données s'effectue selon le procédé bluetooth.

32. Poste radio selon l'une des revendications précédentes 21 à 31, **caractérisé en ce que** le poste radio présente des organes de commande (7, 8) pour commander l'appareil extérieur.

33. Poste radio selon l'une des revendications précédentes 21 à 32, **caractérisé en ce que** le poste radio est équipé de ou relié à un système de reconnaissance vocale pour le traitement d'instructions vocales.

34. Poste radio selon la revendication 33, **caractérisé en ce que** le système de reconnaissance vocal est intégré dans l'appareil extérieur.

35. Poste radio selon l'une des revendications précédentes 21 à 34, **caractérisé en ce que** le poste radio est relié à un système de navigation ou contient un système de navigation.

36. Poste radio selon la revendication 35, **caractérisé en ce que** le poste radio est conçu pour la retransmission au système de navigation d'informations routières, sur le trafic ou sur le trajet reçus par le poste radio ou l'appareil extérieur.

37. Procédé pour l'utilisation d'un dispositif mains libres pour un véhicule, qui est intégré dans un système audio et/ou d'information du véhicule, notamment un poste radio (1) et qui peut être relié directement à un téléphone mobile autonome (2) par une liaison radio bidirectionnelle sur courtes distances sans fil, qui comporte les étapes suivantes :
- identification mutuelle du poste radio (1) et du téléphone mobile (2) lorsque le téléphone mobile (2) pénètre dans la zone radio du poste radio (1),
- commutation du dispositif mains libres en mode d'attente,
- transmission de messages d'état au moyen de la liaison sur courtes distances,
- activation du dispositif mains libres pour la transmission de données de téléphonie mobile à l'arrivée ou en sortie ou d'appels de téléphonie mobile entre le téléphone mobile (2) et le poste radio (1).

38. Procédé selon la revendication 37, **caractérisé en ce que** le dispositif mains libres est commuté automatiquement en mode d'attente.

39. Procédé selon la revendication 37 ou 38, **caractérisé en ce qu'**une sélection de numéros de téléphone peut s'effectuer par les organes de commande (8) du système audio et/ou d'information.

40. Procédé selon l'une des revendications 37 à 39, **caractérisé en ce qu'**un appel téléphonique arrivant peut être reçu au moyen d'un organe de commande (7a) du système audio et/ou d'information.

41. Procédé selon l'une des revendications 37 à 40, **caractérisé en ce que** une transmission d'appels entre le téléphone mobile (2) et le dispositif mains libres ou inversement est possible.

42. Procédé selon l'une des revendications 37 à 41, **caractérisé en ce que** le dispositif mains libres est mis en sourdine lorsque l'appel téléphonique est reçu sur le téléphone mobile (2) ou transmis au téléphone mobile (2).

43. Procédé selon l'une des revendications 37 à 42, **caractérisé en ce que** la liaison radio sur courtes distances s'effectue sur d'autres fréquences ou avec un autre procédé de transmission que la liaison radio entre le téléphone mobile (2) et une installation d'émission/réception stationnaire d'un système de téléphonie mobile.

44. Procédé selon l'une des revendications 37 à 43, **caractérisé en ce que** la liaison radio sur courtes distances s'effectue à l'extérieur des bandes de fréquences des transmissions radio.

45. Procédé selon l'une des revendications 37 à 44, **caractérisé en ce que** la transmission s'effectue par la liaison radio sur courtes distances à des fréquences supérieures à 2 GHz.

46. Procédé selon l'une des revendications 37 à 45, **caractérisé en ce que** la liaison radio sur courtes distances s'effectue selon le procédé bluetooth.

47. Procédé selon l'une des revendications 37 à 46, **caractérisé en ce que** le numéro de téléphone de l'appelant est transmis au système audio et/ou d'information et restitué sur une unité d'affichage.

48. Procédé selon l'une des revendications 37 à 47, **caractérisé en ce que** des préréglages des composants du véhicule sont effectués automatiquement après identification des stations radio.
